# EUROPÄISCHE PATENTSCHRIFT

(11) **EP 0 631 537 B1**
(45) Veröffentlichungstag und Bekanntmachung des Hinweises auf die Patenterteilung: **26.06.1996**
(21) Anmeldenummer: 93903218.1
(22) Anmeldetag: 22.01.1993
(51) Int. Cl.: B29B 17/02

(54) **VERFAHREN UND VORRICHTUNG ZUR ERFASSUNG UND AUFBEREITUNG VON VERSTRECKTE KUNSTSTOFFE ENTHALTENDEN ABFÄLLEN**
METHOD AND DEVICE FOR THE COLLECTION AND REGRANULATION OF WASTE CONTAINING DRAWN PLASTICS
PROCEDE ET DISPOSITIF POUR LA COLLECTE ET LA REGRANULATION DE DECHETS CONTENANT DES MATIERES PLASTIQUES ETIREES

(30) Priorität: 27.01.1992 DE 4202095; 24.06.1992 DE 4220665; 18.08.1992 DE 4227308
(43) Veröffentlichungstag der Anmeldung: 04.01.1995
(73) Patentinhaber: FLEISCHHAUER, Rosa Emilia, D-12307 Berlin (DE); Stricker, Urban, D-57078 Siegen (DE)
(72) Erfinder: STRICKER, Urban, D-5900 Siegen (DE)
(74) Vertreter: Valentin, Ekkehard, Dipl.-Ing.
(86) Internationale Anmeldenummer: EP9300139
(87) Internationale Veröffentlichungsnummer: WO9314915

(56) Entgegenhaltungen:
- EP-A- 0 493 018
- DE-A- 2 611 980
- FR-A- 2 307 635
- US-A- 3 814 240
- US-A- 3 883 624
- US-A- 4 033 804
- PATENT ABSTRACTS OF JAPAN vol. 14, no. 147 (M-952)(4090) 20. März 1990 & JP,A,20 11 307 (FUJITETSUKU K.K.) 16. Januar 1990 siehe Zusammenfassung
- PATENT ABSTRACTS OF JAPAN vol. 13, no. 405 (M-868)(3753) 7. September 1989 & JP,A,11 48 517 (C R K.K.) 9. Juni 1989 siehe Zusammenfassung

## Beschreibung

Die Erfindung betrifft ein Verfahren und eine Vorrichtung zur Erfassung und Aufbereitung von verstreckte Kunststoffe enthaltenden Abfällen, wobei diese in einer Folge von Arbeitsschritten:
a) in einer ersten Zerkleinerungsstufe unter Verwendung eines Schneidwerkes wie Zweiwellen-Schneidwerk zu einem volumenreduzierten Partikelgemisch verarbeitet werden und dieses
b) im Durchlauf durch eine an die Zerkleinerungsstufe anschließende bzw. dieser vorgeschaltete Wärmestrecke einer selektiv wirkenden Erwärmung bis zum Erreichen der Relaxationstemperatur eines im Partikelgemisch enthaltenen Anteils an verstreckten Kunststoffen unterzogen wird und diese Ziel-Kunststoffanteile dabei unter einer weiteren Volumenreduktion geschrumpft und versprödet werden, worauf
c) das dabei anfallende und eine Fraktion geschrumpfter und versprödeter Kunststoff-Partikel einer Sorte und wenigstens eine weitere Fraktion ungeschrumpfter Partikel einer oder mehrerer anderer Kunststoffsorten sowie eine restliche Fraktion Fremdstoffe wie Papier etc. enthaltende Partikel-Gemisch einer Nachzerkleinerung unterzogen und das Zerkleinerungsgut
d) durch Anwendung eines Trenn- bzw. Sortierungsverfahrens im Durchlauf durch eine geeignete Trenn- bzw. Sortiervorrichtung einer Trennung bzw. Sortierung in die unter c) genannten Fraktionen unterzogen wird.

Aus der japanischen Offenlegungsschrift 61-94705 (A) ist ein Verfahren zur Regeneration und zur Wiedergewinnung von Polystyrengranulat aus Altmaterial von Polystyrenschaumstoffteilen bekannt, wobei diese soweit erhitzt werden, daß sie gerade noch nicht schmelzen, zu einem wesentlich verringerten Volumen geschrumpft und stark verdichtet werden, worauf das Material in einem Brecher zerkleinert wird. Ein Modifiziermaterial, enthaltend anorganische Komponenten wie Lehm oder Mergel, Aluminiumhydroxid, Holzchips, Gummi oder Kunststoff wird mit Polystyrengranulat oder pulverförmigem Polystyrenharz gemischt. Die Mischung wird mit einem Extruder pelletisiert und zur Rückgewinnung von Polystyrenharz verwendet. Das Verfahren ist außerordentlich aufwendig und ergibt ein sehr heterogenes Endprodukt, dessen Wiederverwendung sehr enge Grenzen gesetzt ist, insbesondere auch im Hinblick auf das mit hohen Kosten belastete Aufbereitungsverfahren.

Aus der japanischen Offenlegungsschrift JP-A-2-11307 ist eine Vorrichtung zur Qualitätsverbesserung eines wiederverwendbaren Produkts geschäumter Polystyrenabfälle bekannt. Die Abfälle werden durch elektrisch beheizte Drähte in schmale Stücke geschnitten und diese fallen zur Schrumpfung in einen Behälter, worin sie mit Niederdruckdampf einer Temperatur zwischen 120 und 160 °C bei Drücken zwischen 3 bis 6 bar entschäumt und einer Volumenreduktion unterzogen werden. Danach gelangt das Produkt in ein Mahlwerk und wird zu Partikeln einer Korngröße zwischen 10 und 30 mm vermahlen.

Aus der deutschen Auslegeschrift 1 268 813 ist eine Maschine zum Mischen und Plastifizieren von thermoplastischen Kunststoffen mit einer mit einem schnellaufenden Mischwerk ausgerüsteten Mischtrommel bekannt, in welcher das Plastifizieren ausschließlich durch die vom Mischwerk erzeugte Reibungswärme erfolgt. Die Mischmaschine ist mit einer Zerkleinerungseinrichtung für Polyvinylchloridfolien bzw. für sonstige Polyvinylchloridabfälle versehen. Eine selektive Zerkleinerung einer unterschiedliche Kunststoffsorten enthaltenden Abfallmischung ist mit dieser Maschine nicht durchführbar.

Aus der Dokumentation "Kunststoffe" 80 (1990) 3, Carl Hanser Verlag, München 1990, Seite 310 ist eine Abhandlung unter der Überschrift "Direktes Abfallrecycling beim Herstellen von Folien" entnehmbar. Darin ist ausgeführt, daß eine Produktion ohne Abfall nicht möglich ist. Daher ist es wichtig, Produktionsabfälle direkt bei ihrer Entstehung ohne Verschmutzungsmöglichkeit wieder aufzuarbeiten. Bei Kunststoff-Folien ist dies besonders wichtig, weil die Herstellungskosten im wesentlichen von den Materialkosten bestimmt werden. Recyclingmöglichkeiten für Randstreifen und Ausschußfolien werden im genannten Aufsatz beschrieben. Diese Abhandlung betrifft eine spezielle Art von Abfallrecycling unmittelbar im Zusammenhang mit der Produktion von Kunststoffolien. Dies erfordert ein erhebliches Maß von maschinellen Einrichtungen und ist daher auf die Wiederverwendung unsortierter und teilweise verschmutzter Kunststoffabfälle, wie sie im Sektor privater Haushalte und bei Handelsketten etc. im Zusammenhang mit Verpackungsmüll anfallen, nicht geeignet.

Aus der GB-A-1 313 203 ist ein Verfahren und eine Vorrichtung zur Verdichtung von Kunststoffschaumpartikeln bekannt. Diese werden einer vibrierenden kalten Oberfläche aufgegeben, worauf diese transportiert und dabei im Lauf des Transportes durch Hitzeeinstrahlung soweit zum Zusammenfallen gebracht werden, daß sie partiell zusammenbacken, jedoch nicht zur Verklebung mit der transportierenden Oberfläche neigen. Die zusammenbackende Masse wird durch ein Paar gekühlte Kompressionsrollen hindurchgequetscht und zu einer Konsistenz von 400 g/l verdichtet. Daraus werden dann zur weiteren Verwendung zylindrische Pellets durch Extrusion hergestellt, welche eine Dichte von 560 g/l aufweisen. Das Verfahren ist ausschließlich auf die Verarbeitung von thermoplastischen Hartschaumpartikeln anwendbar und erfordert eine strenge Vorsortierung solcher Partikel aus Abfällen, wie sie bspw. beim organisierten Zerlegen von Fahrzeugen, Maschinen oder Großverpackungen anfallen. Für eine Anwendung im weiten Bereich von Abfällen, wie sie bspw. beim Handel oder im Privatsektor anfallen, ist das Verfahren ungeeignet.

Aus der DE-OS 36 01 175 ist ein Verfahren und eine Vorrichtung zum Trennen von unterschiedlichen Polieren aus Polymergemischen bekannt. Das Verfahren geht von der Erkenntnis aus, daß aus Recyclinganlagen anfallende gemeinsame Fraktionen von Polypropylen und Polyäthylen wegen der fast gleichen Dichte der Polymere mittels Hydrozyklon-Trennanlagen nicht trennbar sind. Des weiteren wird als bekannt vorausgesetzt, daß bei üblichen Verfahren zur Trennung und Rückgewinnung von thermoplastischen Kunststoffen aus Kunststoffmüll die Anwendung unterschiedlicher Temperaturen zur stufenweisen Erhitzung vorgesehen ist, wobei jedoch für das Problem der Trennung bereits angeschmolzener von den noch nicht thermisch verschäumten Teilen keine durchführbare Lösung bekannt sei.

Das bekannte Verfahren schlägt daher vor, zum Trennen von Polymermischungen kleiner Teilchengröße aus Polymeren mit etwa gleichen spezifischen Gewichten, jedoch mit unterschiedlichen Schmelzpunkten die Polymermischung chargenweise in einem Schnellmischer durch Friktion oder Mantelheizung bis zur Plastifizierung und Agglomerierung der Polymerteilchen mit dem niedrigeren Schmelzpunkt aufzuheizen, anschließend einem Kühlmischer zuzuführen und nach dem Abkühlen in eine Abscheidevorrichtung in Agglomerat und unverformte Teilchen zu trennen. Eine Vorrichtung umfaßt einen Schnellmischer für die Erwärmung des zu trennenden Gemischs, an den sich ein Kühlmischer anschließt, dessen Auslaß mit einem Windsichter verbunden ist, der als ein an sich bekannter Diffusor oder Prallabscheider oder Zick-Zack-Sichter oder Umlenk-Gegenstromsichter ausgebildet sein kann. Für die Prallabscheidung wird eine gegenüber der das Polymergemisch mit Luftdruck ausstoßenden Düse angeordnete Prallwand vorgeschlagen, zwischen welcher und der Düse sich Auffangbehälter für die unterschiedlichen Polymerfraktionen befinden.

Sowohl das Verfahren als auch die Vorrichtung eignen sich ausschließlich für eine Anwendung im Rahmen einer Anlage von industriellem Zuschnitt und sind wirtschaftlich nur bei hoher dauernder Auslastung betreibbar.

Aus der DE-A-4 004 300 ist ein Verfahren und eine Vorrichtung zum Trennen unterschiedlicher Kunststoffprodukte bekannt. Diese werden in an sich bekannter Weise zerkleinert, gereinigt und getrocknet. Die trocknen Teilchen werden einer beheizten beweglichen Unterlage zugeführt, auf der die Kunststoffteilchen mit dem niedrigeren Erweichungspunkt anhaften und die Teilchen mit dem höheren Erweichungspunkt frei darüber fließen und abgeschieden werden können. Nach der Abtrennung dieser Teilchen werden die anhaftenden Teilchen von dem Stahlband abgeschabt.

Auch dieses Verfahren und die entsprechende Anlage benötigen ein hohes Maß an maschineller und regelungstechnischer Einrichtungen zwecks genauester Einhaltung vorgesehener Temperaturintervalle, weswegen eine hierfür geeignete Anlage nur im großtechnischen industrieellen Maßstab betreibbar ist. Darüber hinaus müssen die Kunststoffteilchen vor der Behandlung gereinigt und zerkleinert sowie in dünner Schicht auf die beheizte Unterlagen gleichmäßig aufgegeben werden, um hohe Fehlerquoten bei der Trennung zu vermeiden. Gleichwohl kann nicht verhindert werden, daß nach dem bekannten Verfahren behandelte unterschiedliche Kunststofffraktionen jeweils einen unterschiedlich hohen Fehlanteil unerwünschten Materials aufweisen.

Aus der US-PS 4,374,573 ist ein fahrbarer Apparat zum Shreddern von Abfällen, insbesondere von Altreifen bekannt. Der Shredder weist mehrere zylindrische Schneidwalzen mit einer Vielzahl von Messerscheiben auf, die gegenläufig rotieren und sich teilweise gegenseitig durchdringen. Mittel zur Weiterverarbeitung der zerkleinerten Gummiabfälle sind nicht angegeben.

Aus der US-PS 4,033,804 ist ein Verfahren und eine Vorrichtung zur Wiedergewinnung von Plastikabfällen und insbesondere zur Aufbereitung molekularisch verstreckter Plastikbehälter bekannt. In einem Verfahren zum Entleimen aufgeklebter Etiketten werden die Kunststoffartikel zumindest bis etwa zur Glastemperatur erhitzt, dabei geschrumpft, wobei sich die Etiketten von den geschrumpften Kunststoffteilen lösen. Die Schrumpfung beträgt dabei mindestens 5%, vorzugsweise zwischen 25 und 125% der Oberfläche des etikettierten Artikels. Durch länger dauernde Erhitzung wird eine weitergehende Schrumpfung der Kunststoffteile erreicht. Weitergehende Verfahrensschritte zur Wiederverwendung der von Etiketten befreiten Kunststoffteile sind in dem Dokument nicht enthalten.

Aus der US-PS 3,814,240 ist ein Verfahren zum Transport einer Mischung von Papierabfällen mit thermoplastischen Folienteilen in der Schwebe eines Heißgasstromes bekannt. Das Verfahren bezweckt die Trennung von Papier und thermoplastischen Folienabfällen durch deren Kontraktion Ihrer spezifischen Oberfläche in einem solchen Ausmaß, um die Trennung der kontraktierten Plastikpartikel aus der Mischung mit Papier durch übliche mechanische Methoden zu erreichen, bspw. durch Luftstromklassierung oder Siebung. Die Vorrichtung umfaßt einen Aufgabeförderer, einen Heißlufterzeuger und eine Trockentrommel, in welcher die Erhitzung der Mischung unter Schrumpfung der Plastikteile erfolgt. Die so behandelten Partikel werden in einem Zyklon aus dem Heißgasstrom abgetrennt und in einem Luftstromklassierer in schwerere geschrumpfte Kunststoffpartikel und leichtere Papierabfälle getrennt. Angaben über eine weitere Verwertung dieser getrennten Produkte sind dem genannten Dokument nicht zu entnehmen.

Aus der US-PS 3,883,624 ist ein Verfahren und eine Vorrichtung zur Wiederverwertung geschäumter thermoplastischer Polymerabfälle im Kreislauf einer Produktion geschäumter thermoplastischer Platten bekannt. Bei der Herstellung thermoplastischer Schaumplatten entstehende Abfälle werden gemahlen und auf ein Stahl-Transportband aufgegeben. Auf diesem werden sie zunächst im Transport durch eine Wärmestrecke aufgeschmolzen und geschrumpft und sodann in einer anschließenden Kühlstrecke versprödet, aufgemahlen und zuletzt den neuen Kunststoff-Granalien beigemischt. Auf diese Weise wird eine 100 %ige, abfallfreie Verwertung des Kunststoff-Produktionsmaterials erreicht.

Aus der DE-OS 25 46 097 ist ein Verfahren zum Aufbereiten der Kunststoffbestandteile von gegebenenfalls vorsortieren Abfallstoffen bekannt. Solche Abfallstoffe können neben Kunststoffen spezifisch leichte Fremdstoffe wie Textil- oder Holzteilchen, Küchenabfälle und dergleichen enthalten. Das bekannte Verfahren umfaßt folgende Verfahrensschritte:
a) Zerkleinern der Abfallstoffe;
b) Erwärmen der nach dem Verfahrensschritt a) vorbehandelten Abfallstoffe, derart, daß die Kunststoffbestandteile der Abfallstoffe agglomeriert und verdichtet werden, und
c) Abkühlen der nach dem Verfahrensschritt b) vorbehandelten Abfallstoffe, derart, daß die agglomerierten und verdichteten Kunststoffbestandteile granuliert werden.

Danach können die bis zum Verfahrensschritt c) vorbehandelten Abfallstoffe einer Schwerkraft-Windsichtung zur Abtrennung der in den granulierten Kunststoffbestandteilen nicht eingelagerten Fremdstoffe unterworfen werden.

Das Verfahren erfordert einen erheblichen maschinellen Aufwand, weshalb es bspw. nur in einer zentralen Aufbereitungsanlage sinnvoll eingesetzt werden könnte, nicht jedoch in externen Erfassungsbereichen, bspw. bei Supermärkten oder Sammelstellen im Bereich kleiner Gemeinden oder Hausgemeinschaften. Des weiteren erfordert die Sortierung unterschiedlicher Kunststoffsorten durch das bekannte Verfahren einen erheblichen Aufwand an Investitionen und Energie, weshalb dessen wirtschaftlicher Einsatz ausschließlich auf größere Anlagen beschränkt bleiben muß.

Der Erfindung liegt ausgehend von dem Stand der Technik gemäß DE-OS 25 46 097 die Aufgabe zugrunde, ein Verfahren und eine Vorrichtung zur Erfassung und Aufbereitung von verstreckte Kunststoffe enthaltenden Abfällen anzugeben, die sich in besonderer Weise dafür eignet, den in der Volkswirtschaft unterschiedlich anfallenden Kunststoffmüll weiträumig zu erfassen und mit wirtschaftlichen Mitteln unter Vermeidung der vorgenannten Schwierigkeiten und technischen Grenzen wenigstens größtenteils einer wirtschaftlichen Wiederverwendung zuzuführen. Insbesondere soll es möglich sein, die anfallenden Kleinmengen, bspw. beim Handel oder aus vorsortiertem Haushaltsmüll zu erfassen und in ein wirtschaftliches Recyclingverfahren einzubeziehen. Verstreckte Thermoplaste werden in der Kunststofftechnik in vielen Bereichen eingesetzt. Darunter fallen vor allem die Produktgruppen Fasern, Folien, Schaumstoffe, Tiefziehteile, Blasformkörper und Umformteile. Gemeinsames Kennzeichen verstreckter Thermoplaste ist eine Orientierung der Kettenmoleküle. Diese Orientierung wird bei der Produktherstellung durch Umformvorgänge im Schmelzbereich oder im abgekühlten Zustand bzw. bei Fasern auch durch Spinnen und Verstrecken hervorgerufen.

Als Altstoffe werfen Produkte aus verstreckten Thermoplasten in vielen Fällen besondere Probleme wegen ihres ungünstigen Volumen/Gewichts-Verhältnisses auf, d.h. sie besitzen hohes Volumen bei geringem Gewicht. Dies betrifft vor allem ihre Handhabbarkeit bei der Erfassung für ein Recycling sowie die Aufbereitung und die Verarbeitung im Recyclingprozeß. Bei der Entsorgung von Schaumstoffen und Fasern treten diese Nachteile besonders deutlich hervor.

Verstreckte Thermoplaste gehen bei Erwärmung bekanntermaßen wieder in den Zustand zurück, der vor dem Verstreckungsprozeß in der Herstellung bestand, d.h., die verstreckten Kettenmoleküle weisen bei erhöhter Temperatur das Bestreben auf, sich wieder in der verknäulten Zustand zu relaxieren. Der Temperaturbereich für diesen Vorgang der Relaxation beginnt unterhalb der Glastemperatur der Thermoplaste. Dies bedeutet, daß dieses Schrumpfen vor einem Schmelzvorgang der Thermoplasten praktisch ohne Emission von Zersetzungsprodukten vonstatten geht.

In den meisten Fällen geht die Relaxation von Thermoplasten mit einer drastischen Änderung der elastischen Eigenschaften einher, die sich in einer deutlichen Versprödung nach dem Abkühlen äußert.

Bei einer Sortierung von Kunststoffgemengen, bspw. aus dem Verpackungsbereich, stellt sich auch die Aufgabe einer Verbundtrennung zwischen Kunststoff und Fremdstoff. Bspw. haften an vielen Kunststoffteilen Reststoffe wie Papier oder Pappe, Holz oder andere.

Zur Lösung der der Erfindung zugrundeliegenden Aufgabe wird bei einem Verfahren entsprechend dem Oberbegriff von Anspruch 1 mit der Erfindung vorgeschlagen, daß die Schritte a) und b) vor Ort an den jeweiligen Stellen des Anfalls bzw. der Erfassung der Abfälle vorgenommen werden, wobei das anfallende und erfaßte voraufbereitete Partikelgemisch zu transportgerechten Chargen gesammelt und zusammengestellt und sodann chargenweise zu einer zentralen Sammel- und Aufbereitungsanlage transportiert wird, und daß die angelieferten Chargen in der zentralen Sammel- und Aufbereitungsanlage vor der Weiterverarbeitung bevorratet und gegebenenfalls dabei vermischt werden, und daß schließlich die Arbeitsschritte c) und d) in der zentralen Aufbereitungsanlage durchgeführt werden.

Das erfindungsgemäße Verfahren beruht demnach im wesentlichen darauf, daß auf der Relaxation von verstreckten Thermoplasten basierende Aufbereitungsschritte bereits dezentral an den Erfassungsstellen für Kunststoff-Altprodukte durchgeführt werden, so daß sich aufgrund der an den Altprodukten durchgeführten Behandlung die Materialeigenschaften in besonderer Weise verändern. Diese veränderten Eigenschaften bewirken durch Volumenschrumpfung Vorteile hinsichtlich des Lager- und Transportvolumens, weiterhin Vorteile für die folgende Aufbereitung und Verarbeitung, und sie benötigen mit Vorteil keine aufwendigen, investitionsintensiven oder eine größere Aufstellfläche erfordernden maschinellen Einrichtungen. Die durch die dezentrale Behandlung hervorgerufenen Erhöhung der Schüttdichte der Altkunststoffe wirkt sich sehr vorteilhaft auf die Lagerhaltung und den Transport sowie auf die weiteren Verarbeitungseigenschaften der Altkunststoffe aus. Durch die Veränderung des physikalischen Verhaltens, insbesondere infolge der stattfindenden Versprödung, werden spezielle Separationsschritte in der weiter vorgesehenen zentralen Aufbereitung der erfaßten Altkunststoffe wesentlich erleichtert bzw. erst ermöglicht. Bei Schaumstoffen läßt sich mit der erfindungsgemäßen Verarbeitung das Lager- und Transportgewicht bei gleichem Volumen um einen Faktor 8 bis 15, bei Fasern und Folien um den Faktor 5 bis 10, bei Tiefzieh- und Blasformkörpern um den Faktor 2 bis 5 gegenüber herkömmlich zerkleinerten verstreckten Thermoplasten erhöhen.

Durch die erfindungsgemäße Koppelung von Zerkleinerung und Relaxation wird zudem ein rieselfähiges Schüttgut erzielt, welches für die weitere Aufbereitung und den Transport günstige Voraussetzungen schafft. Ein Verpressen der Alt-Thermoplaste am Erfassungsort, welches einen zusätzlichen Arbeitsschritt bzw. eine entsprechende maschinelle Einrichtung erforderlich machen würde, wird mit dem erfindungsgemäßen Verfahren überflüssig.

Beim erfindungsgemäßen Verfahren wird für die meisten Anwendungsfälle eine Partikelgröße benötigt, wie sie nach Durchgang der Kunststoffteile durch ein Schneidwerk, bspw. einen Shredder vorliegt. Je nach Anwendungsfall kann diese Zerkleinerung vor oder nach dem Relaxationsprozeß des zu behandelnden Gutes durchgeführt werden.

Dabei bildet die Relaxation des zu sortierenden verstreckten Thermoplasten als Zielthermoplast den zentralen Behandlungsschritt innerhalb des erfindungsgemäßen Verfahrens. Die dadurch hervorgerufene Eigenschaftsänderung des Zielthermoplasten wird erfindungsgemäß zur weiteren Trennung und Sortierung von den übrigen Verbund- oder Gemengematerialien genutzt.

Liegen neben dem Zielthermoplasten weitere Thermoplaste in dem Verbund oder Gemenge vor, so müssen die Erwärmungsbedingungen so gewählt werden, daß ein selektives Schrumpfen des zu sortierenden Thermoplasten erzielt wird.

Die aus dem Stand der Technik bekannte Agglomeration von Kunststoffabfällen durch Erwärmung mittels Friktion ist für das erfindungsgemäße Verfahren ungeeignet, weil bei einer Friktionserwärmung neben dem Zielthermoplasten auch andere Materialien zerkleinert werden, dadurch mit dem erweichten Thermoplasten eine agglomerative Verbindung eingehen und damit eine saubere Trennung des Gemenges in unterschiedliche Sorten erschwert wird.

Weitere Ausgestaltungen des Verfahrens sind entsprechend den Unteransprüchen vorgesehen.

Eine Vorrichtung zur Erfassung und Aufbereitung von verstreckte Kunststoffe enthaltenden Abfällen, insbesondere zur Durchführung des erfindungsgemäßen Verfahrens sieht ein Schneidwerk mit einem Einwurfschacht und einer Anzahl walzenförmig oder scheibenförmig angeordneter Messer sowie als Auslaß, einen Siebboden mit vorzugsweise einstellbarer Spaltweite, und eine anschließend an dieses angeordnete Wärmestrecke und einen Sammelbehälter vor, wobei diese für die Arbeitsschritte a) und b) an dezentralen Stellen des Anfalls innerhalb einer schrankartigen Verschalung in kompakter Bauweise nach Art einer Haushaltsmaschine zu einer integrierten baulichen Einheit zusammengefaßt sind.

Mit der erfindungsgemäßen Vorrichtung gelingt es, das Entsorgungsvolumen von Altprodukten aus verstreckten Thermoplasten auf technisch einfache Weise zu reduzieren und die Aufbereitung und Verarbeitung zu erleichtern. Dabei wird unter Ausnutzung der vorgenannten physikalischen Eigenschaften bzw. Eigenschaftsänderungen bei der Relaxation von verstreckten Thermoplasten mit deren Zerkleinerung und Bevorratung bzw. Absackung in einer kompakten Vorrichtung eine vorteilhaft wirtschaftliche Apparatur zur Durchführung der Verfahrensschritte a) und b) angegeben.

Durch die besonders kompakte Bauweise der Vorrichtung wird es möglich, diese mit geringem materiellen Aufwand überall dort einzusetzen, wo Altstoffe anfallen, bspw. in dezentralen Sammelstellen bei Hausgemeinschaften, Supermärkten, Kleinbetrieben oder dergleichen Organisationen. Die erfindungsgemäße Maschine ist in ihrem Energiebedarf so ausgelegt, daß sie außer einer haushaltsüblichen Energieversorgung keine weiteren Anschlüsse und insbesondere kein festes Fundament benötigt. Sie verursacht keinerlei schädliche Emissionen. Durch den dezentralen Einsatz in den vorgenannten Sammelstellen wird darüber hinaus die Möglichkeit geboten, größere Sammelkapazitäten einzusparen, weil die verstreckten Thermoplaste bereits durch die Vorbehandlungsschritte volumenreduziert sind und daher über längere Zeiträume in den Sammelstellen zum weiteren Transport aufbewahrt werden können.

Durch die kompakte Bauweise der Vorrichtung kann diese auch auf vergleichsweise leichten Fahrzeugen transportiert werden, welche dann verschiedene Orte anfahren können, an denen die zum Recycling vorgesehenen Thermoplaste in vergleichsweise geringer Menge anfallen. Diese können z.B. Baustellen und/oder Geschäfte sein.

Die Vorrichtung kann so ausgelegt sein, daß sie nur mit einem Ein/Aus-Schalter bedient werden kann, also auch für Laien bedienbar ist. Dadurch ist die Vorrichtung auch für eine Aufstellung in solchen Bereichen geeignet, die für Konsumenten und andere Personen öffentlich zugänglich sind. Damit kann der Konsument oder eine beliebige Person Verpackungsmaterialien aus verstreckten Thermoplasten, die er nicht aus dem Laden mitnehmen will, unmittelbar entsorgen und somit einem Recyclingkreislauf zuführen.

Die Erfindung wird in schematischen Zeichnungen in bevorzugten Ausführungsformen gezeigt, wobei aus den Zeichnungen weitere vorteilhafte Einzelheiten der Erfindung entnehmbar sind. Es zeigen:
- Figur 1: eine Folge von Arbeitsschritten bzw. deren Kombinationsmöglichkeiten in Form eines rein schematischen Diagramms;
- Figur 2: einen Verfahrensstammbaum in vereinfachter Form;
- Figur 3: eine Vorrichtung zur Durchführung der Arbeitsschritte a) bis b).

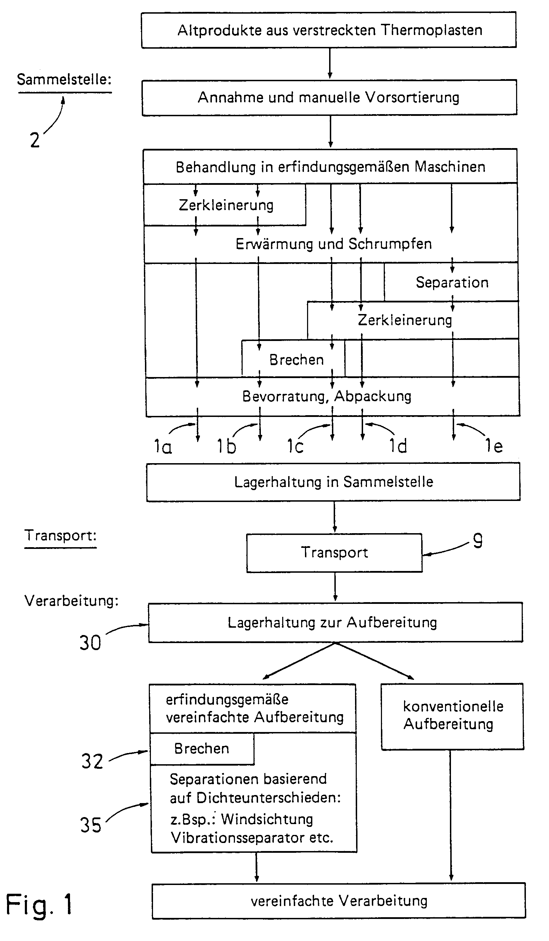

Gemäß dem Ablaufdiagramm in Fig. 1 werden unterschiedliche Kunststoff-Abfallprodukte mit Anteilen an verstreckten Thermoplasten in einer Sammelstelle, bspw. bei einem größeren Supermarkt, angenommen und manuell vorsortiert. In einem ersten Schritt 1a werden bspw. Verbund-Formteile von Partikel-EPS mit geleimter Papierkaschierung, bspw. Etiketten, unter Verwendung eines Zweiwellen-Schneidwerks, eines sogenannten Shredders, zu Partikelgrößen von durchschnittlich 10 mm x 20 mm x 80 mm zerkleinert und dann mit einem Förderband durch eine Infrarot-Erwärmungsstrecke geführt, wobei das EPS auf ca. 105 °C erwärmt wird. Das EPS schrumpft, löst sich vom Papier und liegt in vereinzelten oder instabil zusammenhängenden Partikeln vor, die aus dem Partikelcharakter des Formteils resultieren. Der Leim verbleibt am Papier. Das abgekühlte Gemenge wird in der Sammelstelle zwischengelagert und zur Endverarbeitung mittels Transport in die zentrale Aufbereitungsanlage überführt, worin das teilgeschrumpfte Gemenge durch Brechen in einem Walzenspalt nachzerkleinert und sodann einer Separation basierend auf Dichteunterschieden, bspw. mittels Windsichtung oder Vibrationsseparation unterzogen wird.

Entsprechend einer anderen Schrittfolge 1b können bei der Produktion von Verpackungen und Einweggeschirre aus Extruder-EPS mit innen- und außenliegenden Papierschichten und fallweise zusätzlich angebrachten PE-Folien Stanzreste anfallen, die alle drei Komponenten enthalten. Diese werden in einer dem Schritt 1a analogen Weise zerkleinert und geschrumpft. Das abgekühlte Gemenge wird in der zentralen Aufbereitungsanlage in der vorbeschriebenen Art und Weise aufbereitet. Eine anschließende Siebung führt zur sortenreinen Abtrennung des EPS.

Entsprechend dem Schritt 1c wird ein Gemenge von Faserabfällen, wie es bei der Textilverarbeitung anfällt, in einer Erwärmungsstrecke so erwärmt, daß die Relaxationstemperatur eines im Gemenge enthaltenen Zielthermoplasten erreicht wird. Solche Zielthermoplasten bei Fasern können bspw. verschiedene Polyamide oder auch PET sein. Der Zielthermoplast relaxiert und versprödet beim Abkühlen. Das Gemenge wird dann zur Endverarbeitung einem Brechwerk zugeführt. Der versprödete Zielthermoplast wird in definiert kleine Partikel überführt und ist somit einer Sortierung durch Siebung zugänglich.

Bei der Arbeitsschrittfolge gemäß Schritt 1d wird eine Verbundfolie von zwei unterschiedlichen Thermoplasten oder von einem Thermoplasten mit Papier oder Metall in einer Erwärmungsstrecke so erwärmt, daß die Relaxationstemperatur eines Zielthermoplasten erreicht wird. In Betracht kommende Zielthermoplasten sind hier PE, PP, PA, PET. Das Schrumpfen vor einer Zerkleinerung ist hier von besonderem Vorteil, weil auf diese Weise die gesamte Schrumpfspannung der flächigen Folie genutzt bzw. freigesetzt wird. Der geschrumpfte Zielthermoplast wird nach diesem Behandlungsschritt in der Form von streifen- bzw. faserähnlichen und versprödeten Gebilden an der anderen Verbundkomponente anhaften. Eine anschließende Zerkleinerung durch Quetschung im Brechspalt überführt die nicht-geschrumpfte Verbundkomponente innerhalb der Endverarbeitung in solche Partikel, die aufgrund ihrer Größe eine anschließende Sortierung ermöglichen. Bei der Zerkleinerung wird der geschrumpfte und versprödete Anteil an Zielthermoplasten bereits größtenteils von der anderen Verbundkomponente getrennt. Zur Gewährleistung einer vollständigen Verbundtrennung und einer definiert kleinen Partikelgröße des Zielthermoplasten dient die weitere Behandlung in einem zusätzlichen Brechwerk. Eine abschließende Siebung führt zur sortenreinen Abtrennung des Zielthermoplasten und der anderen Verbundkomponente.

Und schließlich eignet sich der Schritt 1e für die gleiche Aufgabenstellung wie unter 1d beschrieben. Bei solchen Verbundkombinationen, bei denen die Zerkleinerung bereits zu einem sortierbaren Gemenge führt, kann auf das nachfolgende Brechen mittels eines Brechwerkes verzichtet werden.

Eine Ausgestaltung des Verfahrens sieht vor, daß schwer zerkleinerbare Kunststoff-Anteile wie Fasern, Folien, Schaumstoffe, Becher- und/oder Schalenverpackungen etc. vor dem ersten Arbeitsschritt a) thermisch vorbehandelt und dabei fallweise erweicht oder versprödet werden.

Weiterhin kann das vorzerkleinerte Partikelgemisch einer selektiv wirkenden Erwärmung durch Konvektionswärme und Schwerkraftsortierung, bspw. in einem Heißluft-Wirbelbett, unterzogen werden.

Eine Ausgestaltung sieht vor, daß das vorzerkleinerte Partikelgemisch einer selektiven Erwärmung durch Infrarotstrahlungswärme unterzogen wird. Es kann aber auch von der Maßnahme Gebrauch gemacht sein, daß das vorzerkleinerte Partikelgemisch einer selektiven Erwärmung im Durchlauf durch ein Hochfrequenzfeld unterzogen wird.

Weiterhin ist es vorteilhaft, daß ein auf Relaxationstemperatur gebrachtes Gemenge vor einem weiteren Zerkleinerungsschritt zwischengekühlt wird. Während der Abkühlung findet eine Versprödung statt. In den meisten Fällen reicht eine Abkühlung bis zu Temperaturen knapp unterhalb des Relaxationstemperaturbereiches. Ein weiterer Vorteil ergibt sich dadurch, daß mittels Relaxation und nachfolgender Abkühlung der Zielthermoplast in ein rieselfähiges Schüttgut überführt wird, dessen Versprödungszustand für die weitere Verarbeitung besonders günstig ist.

Dabei sieht eine Ausgestaltung vor, daß ein geschrumpfte und versprödete und andere Partikel enthaltendes Gemisch durch Anwendung einer Prall-Zerkleinerung selektiv zerkleinert wird. Eine alternative Ausgestaltung des Verfahrens sieht vor, daß ein geschrumpfte und versprödete sowie andere Partikel enthaltendes Gemisch durch Quetschung im Durchlauf durch einen Walzenspalt eines Zweiwalzen-Brechwerks selektiv zerkleinert wird, wobei durch gezielte Einstellung des Walzenspaltes die Partikelgröße des Zerkleinerungsproduktes vorgegeben wird.

Eine Ausgestaltung des Verfahrens sieht vor, daß eine Sortierung der im Gemenge nach Versprödung und selektiver Nachzerkleinerung anfallenden Partikel in eine den Zielkunststoff enthaltende und andere Kunststoffe oder Stoffe enthaltende Fraktionen durch Siebung erfolgt.

Eine alternative Ausgestaltung des Verfahrens sieht vor, daß die Sortierung des im Gemenge anfallenden versprödeten und/oder nachzerkleinerten Partikelkollektivs mittels Sortierungsverfahren wie Windsichtung, Magnetsichtung, Schwimm/Sink-Scheidung, Vibration oder eine Kombination dieser Verfahren vorgenommen wird.

Schließlich ist mit dem Verfahren vorgesehen, daß aus dem Abfall vor dem ersten Aufbereitungsschritt a) Störstoffe durch Lese- oder Handsortierung entfernt werden.

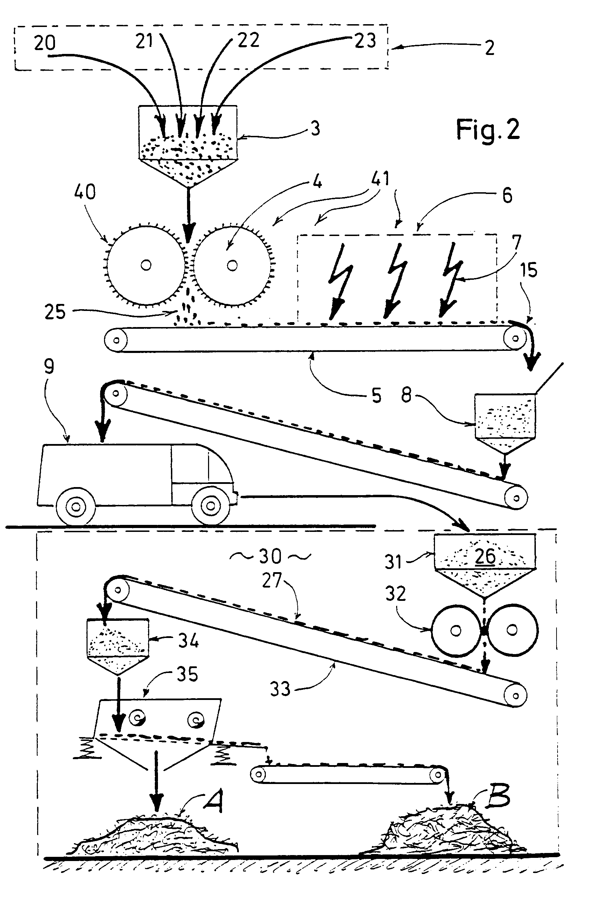

Ein Verfahrensstammbaum, zugleich auch ein vereinfachter Vorrichtungsstammbaum, ist in der Fig. 2 gezeigt. An einer externen Sammelstelle 2, einem öffentlichen oder privaten Entsorger, fallweise auch beim Bau fallen Verpackungsmaterialien wie Folien, Schaumstoffe, Formteile wie Flaschen, Becher, Einweggeschirr oder dergleichen als Kunststoffabfälle 20, 21, 22, 23 an und werden zunächst in einem Behälter oder Container 3 gesammelt. Sobald eine genügende Menge Abfallstoffe angefallen ist, die eine Weiterverarbeitung lohnt, werden sie einem Shredder 4 aufgegeben und in diesem zu Partikeln 25 bzw. zu Schaumstoff-Flocken zerkleinert. Diese Art der Zerkleinerung in einem vergleichsweise langsam laufenden Schneidwerk 4 hat den Vorteil, daß die Kunststoffteile 20 bis 23 einschließlich der ihnen anhaftenden Fremdstoffe und Verunreinigungen unter vergleichsweise geringem Energieeinsatz in eine solche Partikelgröße überführt werden, die nach dem Einschrumpfen eine gute Rieselfähigkeit ergibt. Die Partikel bzw. Flocken 25 werden nun mit einer Transporteinrichtung 5 durch eine Wärmestrecke 6 geführt und dabei bis auf Relaxationstemperatur der verstreckten Kunststoffanteile erwärmt. Der Wärmeeintrag wird dabei so eingestellt, daß die Anteile an verstrecktem Kunststoff vereinzelt schrumpfen, ohne dabei zusammenzubacken. Dies kann fallweise dadurch unterstützt werden, daß anstelle des als Transporteinrichtung 5 gezeigten Transportbandes eine Schüttelrutsche verwendet wird. Die Wärmequelle 7 kann ein Heißlufterzeuger, ein Infrarotstrahler oder ein Hochfrequenzstrahlungsfeld sein. Alternativ ist auch ein Schrumpfen in einem Heißluft-Wirbelbett möglich. Bei Erreichen einer bestimmten Dichte fallen sie durch das Wirbelbett durch und werden ausgetragen. Insgesamt entsteht durch das Schrumpfen der Partikel ein rieselfähiges Schüttgut, welches für die weiteren Arbeitsschritte einschließlich Transport nicht zuletzt auch wegen der durch die Arbeitsschritte a) Zerkleinerung und b) thermische Behandlung erreichten Volumenreduktion sowie Änderung der physikalischen Eigenschaften sehr günstige Voraussetzungen schafft. Das aus der Wärmestrecke 6 anfallende zerkleinerte und thermisch behandelte Gut 15 wird einem Sammelbehälter 8 aufgegeben und daraus zum Transport in eine zentrale Aufbereitungsanlage 30 mit einem Transportfahrzeug 9 transportiert.

In der zentralen Aufbereitungsanlage 30 wird das gesammelte, eine Fraktion geschrumpfter und versprödeter Kunststoff-Partikel einer Sorte und wenigstens eine weitere Fraktion ungeschrumpfter Partikel einer oder mehrerer anderer Kunststoffsorten sowie eine restliche Fraktion Fremdstoffe wie Papier etc. enthaltende Partikel-Gemisch 26 einem Sammelbehälter 31 aufgegeben und darin fallweise nach Aufnahme mehrerer Chargen mit einem (nicht dargestellten) Rührwerk homogen vermischt. Aus dem Sammelbehälter 31 wird das Partikelgemisch 26 im Durchlauf durch einen Walzenbrecher 32 einer Nachzerkleinerung unterzogen, wobei die vorzerkleinerten und in der Wärmestrecke 6 geschrumpften und durch nachfolgende Abkühlung versprödeten Partikel bzw. Flocken 15 mittels vorgegebener Spaltweite des Zweiwellen-Brechers 32 einer selektiven Nachzerkleinerung unterzogen werden.

Unter selektiver Nachzerkleinerung wird verstanden, daß bevorzugt die versprödeten und geschrumpften Partikel des ursprünglich verstreckte Anteile enthaltenden Kunststoff-Gemisches durch eine spezielle Art der Zerkleinerung, bspw. Quetschung oder Prallung nachzerkleinert werden, während die bei der thermischen Behandlung unverändert gebliebenen Kunststoffsorten, bspw. unverstreckte oder höhere Relaxationstemperaturen aufweisenden Kunststoffsorten nicht oder nur in geringem Umfange nachzerkleinert werden. Das hieraus anfallende nachzerkleinerte Partikelgemisch 27 wird in der zentralen Aufbereitungsanlage 30 mittels einer Transporteinrichtung 33 einem Zwischenbehälter 34 aufgegeben und schließlich in einer Sortiereinrichtung 35 in unterschiedliche Sorten bspw. A und B sortiert. Die Wahl der Sortiereinrichtung erfolgt dabei nach Maßgabe des anfallenden Gutes. Bspw. kann diese, wie in der Fig. 2 gezeigt, eine Siebmaschine sein, es kann sich aber auch um eine Vorrichtung zur Windsichtung, zur Magnetsichtung oder zur Sink/Schwimm-Scheidung handeln. Auch können die Partikelgemische 27 in mehreren hintereinander geschalteten Sortiervorrichtungen mit einer Kombination derselben in mehrere Fraktionen sortiert werden. Solche weiteren Ausgestaltungen sind im Stammbaum der Fig. 2 aus Gründen der Übersichtlichkeit nicht dargestellt.

Wie die Fig. 2 weiter zeigt, ist das Schneidwerk 4 mit einer Anzahl walzenförmig oder scheibenförmig angeordneter Messer 40 ausgebildet und kann gegebenenfalls einen Siebboden mit einstellbarer Spaltweite als Auslaß aufweisen.

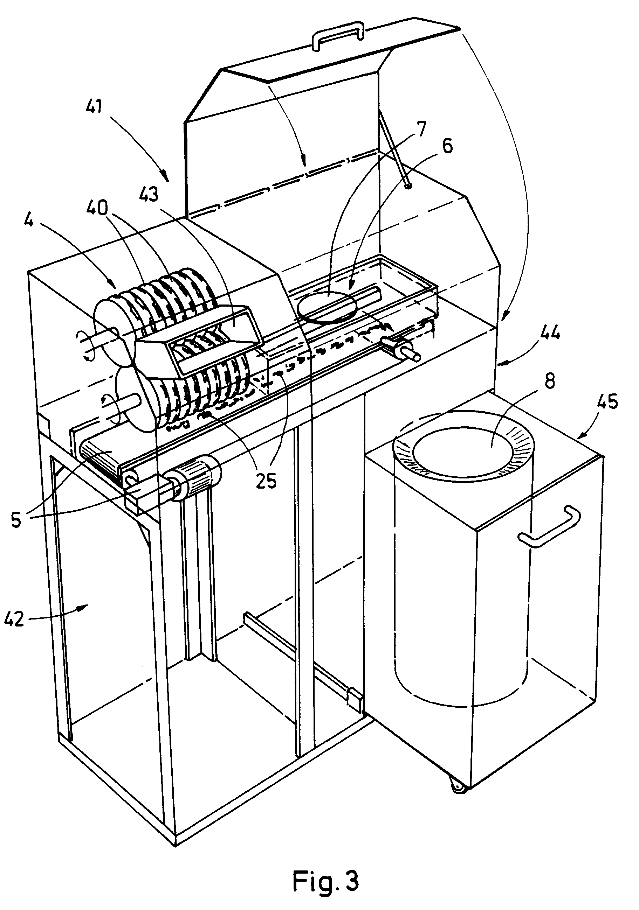

Eine erfindungswesentliche Ausgestaltung sieht vor, daß das Schneidwerk 4 mit der Wärmestrecke 6 und der Transporteinrichtung 5 zu einer funktionellen bzw. baulichen Einheit 41 vereinigt sind, wie dies insbesondere in der Fig. 3 gezeigt ist. Diese weist eine insgesamt sehr kompakte Bauart nach Art eines Schrankes auf. Darin ist in einem ersten Bauteil 42 der Shredder 4 mit den Messern 40 angeordnet. Diesem ist ein Einwurfschacht 43 zugeordnet, durch den auch völlig ungeübte Personen, d.h. kein Fachpersonal, gefahrlos Kunststoffteile wie Becher, Flaschen, Schaumstoffe und dergleichen zur nachfolgenden Zerkleinerung durch den Shredder 4 einwerfen können. Die dann zerkleinerten Partikel bzw. Flocken 25 werden durch die Transporteinrichtung 5, bspw. ein wärmeunempfindliches Transportband, durch die Wärmestrecke 6 transportiert und dabei durch die Wärmequelle 7 aufgeheizt. Diese ist im zweiten Bauteil 44 enthalten, wobei am Abwurfende der Transporteinrichtung 5 der Sammelbehälter 8 in einer ausziehbaren Schublade 45 enthalten ist. Dieser wird dann vom Betriebspersonal der Sammelstelle von Zeit zu Zeit in einen größeren Container entleert und dann entsprechend der Darstellung in Fig. 2 mit einem Transportfahrzeug 9 von Zeit zu Zeit in die zentrale Aufbereitungsanlage 30 transportiert.

In der zentralen Aufbereitungsanlage 30 können die versprödeten Partikel 26 in eine nach oben streng begrenzte Partikelgröße überführt werden. Nicht geschrumpfte, und somit nicht versprödete Kunststoffteile anderer Sorten sowie Etiketten-, Papier- oder Klebestreifenreste, welche in der Praxis häufig in den erfindungsgemäßen Maschinen ebenfalls mitzerkleinert werden, werden in der erfindungsgemäß verwendeten Zerkleinerungsvorrichtung 32, einem Zweiwalzen-Brechwerk nicht zerkleinert. Dadurch kann bspw. mittels einer einfachen Siebung oder durch andere geeignete Trennvorrichtungen wie Windsichter oder Schüttelrinnen die Trennung dieser Fremdstoffe vom Zielthermoplasten vorgenommen werden. Man erhält auf diese Weise eine sortenrein aufbereitete, rieselfähige Altkunststofffraktion A, die in dieser Form einer Kunststoffverarbeitung zugeführt werden kann. Die andere Fraktion B enthält entweder eine weitere Kunststoffsorte oder auch mehrere Kunststoffsorten mit Verunreinigungen, welche nachfolgend nach Wahl in weitere Fraktionen sortiert bzw. zerlegt werden kann.

Für den Einsatz an dezentralen Stellen des Anfalles 2 ist die kompakte Bauweise der integrierten baulichen Einheit 41 nach Fig. 3 mit Schneidwerk 4, Wärmestrecke 6 und Sammelbehälter 8 in einer schrankartigen Verschalung 42, 44, 45 von besonderem Vorteil, weil sie überall dort einsetzbar ist, wo Altstoffe anfallen, also in allen dezentralen Sammelstellen vor Ort, bspw. ein Hausgemeinschaften größerer Wohnblocks, bei Märkten von Handelsketten und dergleichen. Dadurch wird es möglich, eine flächendeckende Erfassung bspw. in Ballungsgebieten durchzuführen, ohne die ein wirklich leistungsfähiges Recycling von Kunststoffabfällen nicht möglich ist. Die kompakte Einheit 41 dieser Vorrichtung benötigt weiterhin keine höheren Energieeinspeisungen als andere gängige Haushaltsmaschinen wie bspw. Waschmaschinen etc. und kann von jedem Laien ohne vorherige Instruktion bedient werden. Die vorbereitenden Arbeitsschritte a) und b) vor der Endaufbereitung in der zentralen Aufbereitungsanlage 30 führen auch bereits zu einer Trennung von Verbundmaterialien, die das nachfolgende Gewinnen einer Fraktion von Zielthermoplasten Vorschub leistet. Bekanntermaßen findet - zumindest teilweise - eine Verbundtrennung bei einigen Verbundkombinationen bereits während eines Zerkleinerungsprozesses statt. Voraussetzung dazu ist ein ausreichend sprödes Verhalten mindestens einer der Verbundkomponenten. Überraschenderweise zeigt sich, daß bereits die selektive Relaxation von Verbundmaterialien, die einen Zielthermoplasten enthalten, zu einer weitgehenden Verbundtrennung führt. Dies kann darauf zurückgeführt werden, daß die während der Relaxation freigesetzte Schrumpfspannung auf die Grenzfläche zwischen den Verbundmaterialien wirksam wird und dort unter Erweichung der Haftschicht zu einem Abschälen der schrumpfenden Komponente führt. Auch bei der weiteren Sortierung, die häufig durch mechanische Einwirkung wie Vibrationen, Prallkräfte und ähnliches unterstützt wird, kann eine Trennung von zuvor versprödeten Zielthermoplasten erfolgen. Somit kann eine Verbundtrennung beim erfindungsgemäßen Verfahren je nach Zusammensetzung und Beschaffenheit des Gutes sowohl während der Verfahrensschritte a) und b), als auch während der Verfahrensschritte c) und d) erfolgen.

Die Sortierung des Zielthermoplasten aus dem Gemenge ist der letzte Verfahrensschritt. Die vorhergehenden Verfahrensschritte dienen dazu, das Gemenge oder die Verbundmaterialien in eine solche Form zu überführen, daß darin der Zielthermoplast als kleines Partikel vorliegt, während die anderen Gemengekomponenten die durch die anfängliche Vorzerkleinerung vorgegebene Größe aufweisen.

Bei den sich mehr und mehr durchsetzenden bzw. in Zukunft zu erwartenden Sammel- und Sortiermethoden für Altprodukte entstehen an vielen Stellen vorsortierte Gemenge von Altprodukten bzw. Altstoffen. Es existieren bereits Annahmestellen, die Produktgruppen spezifische Sammlungen, bspw. von Polystyrol-Schaumstoffen (EPS) durchführen. Bei der Sortierung von Wertstoffsammlungen werden bspw. Becher und Blister oder Hohlkörper als einzelne Fraktionen gewonnen. Solche Altstoffgemenge, die neben thermoplastischen Kunststoffen auch andere Wertstoffe enthalten, entstehen bei der Produktdemontage, bspw. von KFZ- oder Haushaltsgeräten. Als Eingangskriterium für die erfindungsgemäß zu behandelnden Verbundmaterialien oder Altstoffgemenge gilt, daß nur solche Stoffe zulässig sein sollen, die nicht von sich aus bereits zu spröde sind, um während des Verfahrens weiter versprödet zu werden, so daß sie unter den gegebenen Verfahrensbedingungen neben dem Zielthermoplasten ebenfalls in kleine Partikel überführt und daraufhin nur ungenau sortiert werden können. Vorzugsweise sind solche Abfälle für die Durchführung des erfindungsgemäßen Verfahrens geeignet, die neben dem selektiv relaxierbaren Zielthermoplasten andere nicht sprödhafte Kunststoffe, Papier oder dünnwandige Metallteile wie Aluminiumfolien enthalten. Besonders gut geeignete Zielthermoplasten sind bspw. PS und PS-Compounds, PET, PA, CA sowie PE, PP, PVC, sofern diese nicht speziell weich-elastisch eingestellt sind. In der vorsortierten Fraktion können zum Teil andere Stoffe zunächst mit dem Zielthermoplasten verbleiben. Von diesem können sie zu einem späteren Zeitpunkt in einem weiteren Aufbereitungs- oder Sortierungsschritt getrennt werden, sofern sie nicht im Sekundärprodukt verbleiben können.

Die Erfindung befaßt sich - wie zuvor erwähnt wurde - u.a. mit der Aufbereitung von Kunststoffsorten aus Verbundmaterialien, Verbundbauteilen, Verbundprodukten oder dergleichen, die u.a. im Gemenge auch mit Fremdmaterialien als Aufgabegut vorliegen.

Das Aufgabegut wird auf ein Fließbett eines Eigenfrequenzförderers aufgegeben und dort während der Förderung auf die für das Relaxieren des zu sortierenden Thermoplasten notwendige Temperatur erwärmt. Bei der Relaxation stellt sich die gewünschte Verbundtrennung und/oder Volumenreduzierung des zu sortierenden Thermoplasten ein. Im Anschluß an dieses beheizte Fließbett gelangt das Fördergut auf ein Fließbett, das mit einem Siebboden (Lochblech) versehen ist. Optional kann auch bereits das Fließbett mit einem Sieb versehen sein, bei dem die Erwärmung stattfindet, so daß geschrumpfte Partikel direkt das Fließbett durch das Sieb passieren. Die relaxierten Thermoplastpartikel fallen durch das Sieb, während alle anderen Materialien weitergefördert werden. Der relaxierte Thermoplast kann somit separat abgeführt werden.

Liegen im Aufgabegut mehrere verstreckte Thermoplaste unterschiedlicher Sorten vor, so können diese durch Hintereinanderschaltung mehrerer erfindungsgemäßer Fließbettstrecken jeweils nach dem Durchlaufen der für den verstreckten Thermoplasten charakteristischen Relaxationstemperatur voneinander und aus dem Gemenge getrennt werden.

Beispielsweise sollen Schaumstoff-Flocken behandelt werden, wie sie aus der Zerkleinerung von Schaumstoffprodukten resultieren. In dem Aufgabegut liegen PS, PE, PP, PU und auch mineralische Schaumstoffe vor. Die Flockengröße beträgt durch die Verwendung eines Zerkleinerungsaggregates etwa 10 x 30 x 20 mm.

Es wird ein Wendelförderer eingesetzt, der drei Erwärmungszonen mit jeweils anschließenden Siebzonen hintereinander aufweist. In der ersten Erwärmungszone wird das Aufgabegut auf 100 bis 105 °C erwärmt, wodurch die PS-Flocken schrumpfen. Aufgrund der Vibration schrumpfen die Flocken immer als vereinzelte Partikel. In der anschließenden Siebstrecke wird das PS abgesiebt. In der nächsten Erwärmungsstrecke wird eine Temperatur von 135 - 140 °C erreicht, wodurch das PE schrumpft und in der anschließenden Siebstrecke abgesiebt wird. In der dritten Erwärmungsstufe schrumpft das PP bei 150 - 160 °C und wird anschließend abgesiebt. Die abgesiebten Fraktionen können anschließend erfindungsgemäß weiter aufbereitet werden.

In der Überlauf-Fraktion verbleiben die PU und die mineralischen Schaumstoff-Flocken sowie eventuelle Etiketten oder Klebestreifen, die zuvor mit einem der separierten Schaumstoffe im Verbund vorgelegen haben. Alle Thermoplasten wurden sortiert und können einem sortenreinen Umschmelzrecycling zugeführt werden.

## Patentansprüche

1. Verfahren zur Erfassung und Aufbereitung von verstreckte Kunststoffe enthaltenden Abfällen (20 bis 23), wobei diese in einer Folge von Arbeitsschritten:
a) in einer ersten Zerkleinerungsstufe unter Verwendung eines Schneidwerkes (4) wie Zweiwellen-Schneidwerk zu einem volumenreduzierten Partikelgemisch (25) verarbeitet werden und dieses
b) im Durchlauf durch eine an die Zerkleinerungsstufe anschließende bzw. dieser vorgeschaltete Wärmestrecke (6) einer selektiv wirkenden Erwärmung bis zum Erreichen der Relaxationstemperatur eines im Partikelgemisch enthaltenen Anteils an verstreckten Kunststoffen unterzogen wird und diese Ziel-Kunststoffanteile dabei unter einer weiteren Volumenreduktion geschrumpft und versprödet werden, worauf
c) das dabei anfallende und eine Fraktion geschrumpfter und versprödeter Kunststoff-Partikel einer Sorte und wenigstens eine weitere Fraktion ungeschrumpfter Partikel einer oder mehrerer anderer Kunststoffsorten sowie eine restliche Fraktion Fremdstoffe wie Papier etc. enthaltende Partikel-Gemisch (26) einer Nachzerkleinerung unterzogen und das Zerkleinerungsgut (27)
d) durch Anwendung eines Trenn- bzw. Sortierungsverfahrens im Durchlauf durch eine geeignete Trenn- bzw. Sortiervorrichtung (35) einer Trennung bzw. Sortierung in die unter c) genannten Fraktionen unterzogen wird,
**dadurch gekennzeichnet,**
daß die Schritte a) und b) vor Ort an den jeweiligen Stellen des Anfalls bzw. der Erfassung (2) der Abfälle (20 bis 23) vorgenommen werden, wobei das anfallende und erfaßte voraufbereitete Partikelgemisch (26) zu transportgerechten Chargen gesammelt und zusammengestellt und sodann chargenweise zu einer zentralen Sammel- und Aufbereitungsanlage (30) transportiert wird, und daß die angelieferten Chargen in der zentralen Sammel- und Aufbereitungsanlage vor der Weiterverarbeitung bevorratet und dabei vermischt werden, und
daß schließlich die Arbeitsschritte c) und d) in der zentralen Aufbereitungsanlage (30) durchgeführt werden.

2. Verfahren nach Anspruch 1,
**dadurch gekennzeichnet,**
daß schwer zerkleinerbare Kunststoff-Anteile wie Fasern, Folien, Schaumstoffe, Becher- und/oder Schalenverpackungen vor dem ersten Arbeitsschritt a) thermisch vorbehandelt und dabei fallweise erweicht oder versprödet werden.

3. Verfahren nach Anspruch 1 oder 2,
**dadurch gekennzeichnet,**
daß Kunststoff-Abfälle (20 bis 23) mit Verbundmaterialien, Verbundbauteilen oder deren Gemenge zunächst als Aufgabegut im Fließbett erwärmt werden, so daß der erste zu sortierende Thermoplast schrumpft und dieser dann in einem weiterführenden Sieb-Fließbett, das in seiner Siebweite auf die obere Größe der geschrumpften Partikel abgestimmt ist, von den ungeschrumpften Materialien sortiert und getrennt abgeführt wird, wobei zur Sortierung mehrerer verstreckten Thermoplaste mehrere Erwärmungs- und Sieb-Fließbette so hintereinander geschaltet werden können, daß durch eine stufenweise Temperaturerhöhung des Aufgabegutes die Thermoplasten bei den ihrer Sorte entsprechenden Temperaturen schrumpfen.

4. Verfahren nach Anspruch 1 oder 2,
**dadurch gekennzeichnet,**
daß das vorzerkleinerte Partikelgemisch einer selektiv wirkenden Erwärmung durch Konvektionswärme und Schwerkraftsortierung z.B. in einem Heißluft-Wirbelbett unterzogen wird.

5. Verfahren nach Anspruch 1 oder 2,
**dadurch gekennzeichnet,**
daß das vorzerkleinerte Partikelgemisch einer selektiv wirkenden Erwärmung durch Infrarotstrahlungswärme unterzogen wird.

6. Verfahren nach Anspruch 1 oder 2,
**dadurch gekennzeichnet,**
daß das vorzerkleinerte Partikelgemisch einer selektiv wirkenden Erwärmung im Durchlauf durch ein Hochfrequenzfeld unterzogen wird.

7. Verfahren nach einem oder mehreren der Ansprüche 1 bis 6, **dadurch gekennzeichnet,**
daß ein auf Relaxationstemperatur gebrachtes Gemenge vor einem Zerkleinerungsschritt zwischengekühlt wird.

8. Verfahren nach einem oder mehreren der Ansprüche 1 bis 7, **dadurch gekennzeichnet,**
daß geschrumpfte und versprödete Partikel in einem diese enthaltenden Gemisch (26) durch Anwendung einer Prall-Zerkleinerung selektiv zerkleinert werden.

9. Verfahren nach einem oder mehreren der Ansprüche 1 bis 7, **dadurch gekennzeichnet,**
daß geschrumpfte und versprödete Partikel in einem diese enthaltenden Gemisch (26) durch Quetschung im Durchlauf durch einen Walzenspalt eines Zweiwalzen-Brechwerks (32) selektiv zerkleinert werden, wobei durch gezielte Einstellung des Walzenspaltes die Partikelgröße des Zerkleinerungsproduktes (27) vorgegeben wird.

10. Verfahren nach einem oder mehreren der Ansprüche 1 bis 9, **dadurch gekennzeichnet,**
daß eine Sortierung der im Gemenge nach Versprödung und Zerkleinerung anfallenden Partikel (27) in eine den Zielkunststoff enthaltende und andere Kunststoffe oder Stoffe enthaltende Fraktionen (A bzw. B) durch Siebung erfolgt.

11. Verfahren nach einem oder mehreren der Ansprüche 1 bis 9, **dadurch gekennzeichnet,**
daß die Sortierung des im Gemenge anfallenden versprödeten und/oder nachzerkleinerten Partikelkollektivs (27) mittels Windsichtung, Magnetsichtung, Schwimm/Sink-Scheidung, Vibration oder eine Kombination dieser Verfahren vorgenommen wird.

12. Verfahren nach einem oder mehreren der Ansprüche 1 bis 11, **dadurch gekennzeichnet,**
daß aus dem Abfall vor dem ersten Aufbereitungsschritt a) Störstoffe durch Lesung oder Handsortierung entfernt werden.

13. Vorrichtung zur Erfassung und Aufbereitung von verstreckte Kunststoffe enthaltenden Abfällen (20 bis 23), insbesondere zur Durchführung des Verfahrens nach einem der Ansprüche 1 bis 12, wobei diese umfaßt:
- ein Schneidwerk (4) mit einem Einwurfschacht (43) und einer Anzahl walzenförmig oder scheibenförmig angeordneter Messer (40) sowie als Auslaß einen Siebboden mit vorzugsweise einstellbarer Spaltweite;
- eine anschließend an dieses (4) angeordnete Wärmestrecke (6);
- einen Sammelbehälter (8),
**dadurch gekennzeichnet,**
daß diese (4, 6, 8) für die Arbeitsschritte a) und b) an dezentralen Stellen des Anfalls (2) innerhalb einer schrankartigen Verschalung (42, 44, 45) in kompakter Bauweise nach Art einer Haushaltsmaschine zu einer integrierten baulichen Einheit (41) zusammengefaßt sind.

14. Vorrichtung nach Anspruch 13,
**dadurch gekennzeichnet,**
daß die Wärmestrecke (6) eine Transporteinrichtung (5) wie Förderband, Schüttelrutsche oder Vibrorinne aufweist, und in ihrem Bereich als Wärmequelle (7) ein Heißluftgenerator bzw. Infrarotstrahler bzw. Hochfrequenzfelderzeuger angeordnet ist.

15. Vorrichtung nach Anspruch 13,
**dadurch gekennzeichnet,**
daß die Wärmestrecke (6) ein Heißluft-Wirbelbett aufweist oder als solches ausgebildet ist.

16. Vorrichtung nach Anspruch 13,
**dadurch gekennzeichnet,**
daß die Wärmestrecke (6) im Fall von Kunststoffsorten aus Verbundprodukten oder Gemengen ein alternierend mit wenigstens einem Sieb und wenigstens einer Erwärmungszone ausgestatteter Eigenfrequenzförderer ist.

17. Vorrichtung nach einem oder mehreren der Ansprüche 13 bis 16,
**dadurch gekennzeichnet,**
daß der Wärmestrecke (6) eine Vorrichtung (32) zur selektiven Nachzerkleinerung des geschrumpften und versprödeten Zielkunststoffes nachgeordnet und diese als Prallbrecher ausgebildet ist.

18. Vorrichtung nach Anspruch 17,
**dadurch gekennzeichnet,**
daß die Vorrichtung zur selektiven Nachzerkleinerung ein Zweiwalzen-Brechwerk (32) ist.

19. Vorrichtung nach einem oder mehreren der Ansprüche 13 bis 18,
**dadurch gekennzeichnet,**
daß der Nachzerkleinerungsvorrichtung eine Sortiervorrichtung nachgeordnet und als Siebmaschine (35) ausgebildet ist.

20. Vorrichtung nach einem der Ansprüche 13 bis 18,
**dadurch gekennzeichnet,**
daß die Sortiervorrichtung (35) als Windsichter bzw. Magnetsichter bzw. Schwimm/Sink-Scheider bzw. Schüttelrinne etc. ausgebildet ist.

## Claims

1. Method for detecting and refining waste materials (20 to 23) containing expanded plastics materials, wherein these waste materials in a series of working steps:
a) are processed into a particle mixture (25) reduced in volume in a first comminution stage with use of a cutting mechanism (4) such as a twin-shaft cutting mechanism and this
b) in the course of passage through a heating path (6) following the comminution stage or connected upstream thereof is subjected to a selectively acting heating up to attainment of the relaxation temperature of a component of expanded plastics materials contained in the particle mixture and these desired plastics material components in that case are shrunk and embrittled under a further reduction in volume, whereupon
c) the plastics material particles of one kind thus obtained and shrunk and embrittled to a fraction and at least one further fraction of unshrunk particles of one or more other plastics material kinds as well as particle mixtures (26) containing a residual fraction of foreign materials such as paper etc., are subjected to a subsequent comminution and the comminuted stock (27)
d) is subjected to a separation or sorting into the fractions stated under c) by use of a separating or classifying process in the course of passage through a suitable separating or classifying device (35),
characterised thereby that the steps a) and b) are undertaken on the spot at the respective places of accrual or detection (2) of the waste materials (20 to 23), wherein the accruing and detected preliminary refined particle mixture (26) is collected and combined into batches suitable for transport and then transported in batches to a central collation and refining plant (30), and that the delivered batches are stored in the central collation and refining plant before further processing and in that case are mixed and that finally the working steps c) and d) are carried out in the central refining plant (30).

2. Method according to claim 1, characterised thereby that synthetic material components which are difficult to comminute, such as fibres, foils, foam plastics, beaker and/or shell packagings, are thermally treated before the first working step a) and thus are softened or shrunk according to case.

3. Method according to claim 1 or 2, characterised thereby that plastics waste materials (20 to 23) with composite materials, composite components or mixtures thereof are initially heated as feed stock in the fluidised bed so that the first thermoplastic to be sorted shrinks and this is then sorted in a continuation sieve flow bed, which is matched in its sieve mesh width to the upper limit size of the shrunk particles, from the unshrunk materials and separately discharged, wherein several heating and sieving fluidised beds can be so connected one after the other for the purpose of sorting several expanded thermoplastics that the thermoplastics shrink at temperatures corresponding to their type by a stepwise temperature increase of the feed stock.

4. Method according to claim 1 or 2, characterised thereby that the preliminarily comminuted particle mixture is subjected to a selectively acting heating through convection heat and gravitational sorting, for example in a hot air fluidised bed.

5. Method according to claim 1 or 2, characterised thereby that the preliminarily comminuted particle mixture is subjected to a selectively acting heating through infrared radiation heat.

6. Method according to claim 1 or 2, characterised thereby that the preliminarily comminuted particle mixture is subjected to a selectively acting heating in the course of passage through a high-frequency field.

7. Method according to one or more of claims 1 to 6, characterised thereby that a mixture brought to relaxation temperature is intermediately cooled before a comminution step.

8. Method according to one or more of claims 1 to 7, characterised thereby that the shrunk and embrittled particles in a mixture (26) containing these are selectively comminuted by use of an impact comminution.

9. Method according to one or more of claims 1 to 7, characterised thereby that the shrunk and embrittled particles in a mixture (26) containing these are selectively comminuted by crushing in the course of passage through a roll gap of a double roll crusher (32), wherein the particle size of the comminution product (27) is preset by targetted setting of the roll gap.

10. Method according to one or more of claims 1 to 9, characterised thereby that a sorting of the particles (27), which arise in the mixture after embrittlement and comminution, into [a] fractions (A or B) containing the desired plastics materials and containing other plastics materials or substances is effected.

11. Method according to one or more of claims 1 to 9, characterised thereby that the sorting of the shrunk and/or subsequently comminuted particle combination (27) occurring in the mixture is undertaken by means of air sifting, magnetic sifting, float or sink separation, vibration or a combination of these methods.

12. Method according to one or more of claims 1 to 11, characterised thereby that interferring substances are removed by picking out or manual sorting from the waste material before the first refining step a).

13. Device for the detection and refining of waste materials (20 to 23) containing expanded plastics materials, especially for carrying out the method according to one of claims 1 to 12, wherein this comprises:
- a cutting mechanism (4) with a charging shaft (43) and a plurality of knives (40) arranged in roll-shape or disc-shape as well as a sieve base, with preferably settable gap width, as outlet;
- a heating path (6) arranged adjoining this (4);
- a collecting container (8),
characterised thereby that these (4, 6, 8) are combined, for the working steps a) and b), into an integrated constructional unit at decentral locations of the accrual (2) within a cabinet-like casing (42, 44, 45) in compact mode of construction in the manner of a domestic appliance.

14. Device according to claim 13, characterised thereby that the heating path (6) comprises a transport equipment (5) such as a conveyor belt, shaker chute or vibratory channel, and a hot air generator or infrared radiator or high-frequency field generator is arranged in the region thereof as a heat source (7).

15. Device according to claim 13, characterised thereby that the heating path (6) has a hot air fluidised bed or is constructed as such.

16. Device according to claim 13, characterised thereby that in the case of plastics material types of composite products or mixtures the heating path (6) is a natural frequency conveyor equipped in alternation with at least one sieve and at least one heating zone.

17. Device according to one or more of claims 13 to 16, characterised thereby that a device (32) for the selective subsequent comminution of the shrunk and embrittled desired plastics material is arranged behind the heating path (6) and this device is constructed as an impact crusher.

18. Device according to claim 17, characterised thereby that the device for the selective subsequent comminution is a double roll crusher (32).

19. Device according to one or more of calims 13 to 18, characterised thereby that a sorting device is arranged behind the subsequent comminution device and is constructed as a sieve machine (35).

20. Device according to one or more of claims 13 to 18, characterised thereby, that the sorting device (35) is constructed as an air sifter or a magnetic sifter or a float/sink sifter or shaker channel, etc.

## Revendications

1. Procédé pour rassembler et traiter des déchets (20 à 23) contenant matières synthétiques étirées dans lequel, au cours d'une série d'étapes de procédé:
a) ces déchets sont traités dans une première étape de broyage en utilisant un appareil pour couper (4) tel qu'un appareil à deux arbres de manière à obtenir un mélange de particules (25) à volume réduit,
b) dans lequel ce mélange est soumis à un chauffage à effet sélectif en passant dans une zone de chauffage (6) consécutive ou précédent l'étape de broyage jusqu'à atteindre la température de relaxation d'une proportion de matières synthétiques étirées contenue dans le mélange de particules et cette proportion visée de matières synthétiques étant ainsi rétrécie et fragilisée avec une nouvelle réduction de volume, puis
c) dans lequel on soumet le mélange de particules (26) ainsi formé, contenant une fraction de particules de matières synthétiques rétrécies et fragilisées d'un type et au moins une autre fraction de particules non rétrécies d'un ou de plusieurs types de matières synthétiques ainsi qu'une fraction résiduelle de substances étrangères telles que du papier etc., à un broyage ultérieur et
d) dans lequel le produit broyé (27) est soumis, en utilisant un procédé de séparation et de triage lorsqu'il passe dans un dispositif de séparation et de triage (35), à une séparation et un triage de manière à obtenir les fractions mentionnées au point c),
caractérisé en ce que les étapes a) et b) sont réalisées à l'endroit de la formation ou du rassemblement (2) des déchets (20 à 23), le mélange de particules (26) se formant et prétraité étant rassemblé et assemblé en charges pouvant être transportées et étant transporté par charges vers une installation centrale (30) de rassemblement et de traitement et en ce que les charges livrées dans l'installation centrale de rassemblement et de traitement sont stockées et mélangées avant le traitement ultérieur et en ce qu'enfin les étapes c) et d) sont réalisées dans l'installation centrale de traitement (30).

2. Procédé selon la revendication 1, caractérisé en ce qu'on prétraite thermiquement les proportions de matières synthétiques dont le broyage est difficile, telles que des fibres, des films, des mousses, des boîtes d'emballage et/ou des feuilles d'emballage, avant la première étape a) et en ce qu'elles sont, le cas échéant, ramollies ou fragilisées.

3. Procédé selon la revendication 1 ou 2, caractérisé en ce que les déchets de matières synthétiques (20 à 23) sont alimentés et réchauffés dans un lit fluidisé avec les matériaux composites, les pièces composites ou leurs mélanges de telle manière que le premier thermoplastique à trier rétrécit et que celui-ci est séparé des matériaux non rétrécis dans un lit fluidisé de tamisage consécutif dont la maille des tamis est adaptée à la taille supérieure des particules rétrécies et qu'il est évacué séparément, plusieurs lits fluidisés de chauffage et de tamisage pouvant être placés l'un derrière l'autre pour trier plusieurs thermoplastiques étirés de telle manière que par une augmentation graduelle de la température du produit alimenté, les thermoplastiques rétrécissent à la température qui leur correspond.

4. Procédé selon la revendication 1 ou 2, caractérisé en ce que le mélange de particules broyé au préalable est soumis à un chauffage à effet sélectif par chaleur de convection et triage gravimétrique, par exemple dans un lit fluidisé à air chaud.

5. Procédé selon la revendication 1 ou 2, caractérisé en ce que le mélange de particules broyé au préalable est soumis à un chauffage à effet sélectif à l'aide de la chaleur d'un rayonnement infra-rouge.

6. Procédé selon la revendication 1 ou 2, caractérisé en ce que le mélange de particules broyé au préalable est soumis à un chauffage à effet sélectif par un passage dans un champ haute-fréquence.

7. Procédé selon une ou plusieurs des revendications 1 à 6, caractérisé en ce que le mélange amené à la température de relaxation est refroidi avant une étape de broyage.

8. Procédé selon une ou plusieurs des revendications 1 à 7, caractérisé en ce que les particules rétrécies et fragilisées dans un mélange (26) qui les contient sont broyées sélectivement en utilisant un broyage par chocs.

9. Procédé selon une ou plusieurs des revendications 1 à 7, caractérisé en ce que les particules rétrécies et fragilisées dans un mélange (26) qui les contient sont broyées sélectivement par écrasement par un passage dans une fente de laminage d'un broyeur (32) à deux cylindres, la taille des particules du produit broyé (27) étant définie par le réglage de la fente entre les cylindres.

10. Procédé selon une ou plusieurs des revendications 1 à 9, caractérisé en ce qu'un triage des particules (27) formées dans le mélange après fragilisation et broyage en une fraction contenant la matière synthétique visée et d'autres fractions contenant d'autres matières synthétiques ou substances (A ou B) est réalisé par tamisage.

11. Procédé selon une ou plusieurs des revendications 1 à 9, caractérisé en ce que le triage de l'ensemble des particules (27) fragilisées et/ou broyées ultérieurement qui se forment dans le mélange est réalisé par un tamisage à air, un tamisage magnétique, une séparation par flottation gravimétrique, par vibration ou par une combinaison de ces procédés.

12. Procédé selon une ou plusieurs des revendications 1 à 11, caractérisé en ce que les substances non désirées sont éliminées des déchets avant la première étape de traitement a) par triage manuel ou autre.

13. Dispositif pour rassembler et traiter des déchets (20 à 23) contenant des matières synthétiques étirées, en particulier pour la réalisation du procédé selon une quelconque des revendications 1 à 12, comportant:
- un appareil pour couper (4) présentant un conduit d'introduction (43) et un certain nombre de couteaux (40) disposés en forme de cylindre ou de disque ainsi qu'un fond de tamisage à la sortie dont la largeur de la fente peut de préférence être réglée;
- une zone de chauffage (6) consécutive à l'appareil pour couper (4);
- un récipient de rassemblement (8),
caractérisé en ce que ces différentes parties (4, 6, 8) pour les étapes a) et b) sont rassemblées en des endroits décentralisés de production (2) dans une enveloppe en forme d'armoire (42, 44, 45), de manière compacte comme une machine ménagère de manière à former une unité intégrée (41).

14. Dispositif selon la revendication 13, caractérisé en ce que la zone de chauffage (6) présente un dispositif de transport (5), tel qu'une bande transporteuse, un chenal vibrant ou une trémie vibrante et en ce qu'elle comporte dans sa proximité comme source de chaleur (7) un générateur à air chaud ou un émetteur de rayons infra-rouges ou d'un champ haute-fréquence.

15. Dispositif selon la revendication 13, caractérisé en ce que la zone de chauffage (6) présente un lit fluidisé à air chaud ou est exécuté comme tel.

16. Dispositif selon la revendication 13, caractérisé en ce que la zone de chauffage (16), dans le cas de types de matières synthétiques en produits composites ou de mélanges, est un dispositif d'alimentation à fréquence propre équipé alternativement d'au moins un tamis et d'au moins une zone de chauffage.

17. Dispositif selon une quelconque des revendications 13 à 16, caractérisé en ce qu'on dispose après la zone de chauffage (6) un dispositif (32) pour le broyage sélectif de la substance synthétique visée rétrécie et fragilisée et que celui-ci est exécuté sous forme d'un concasseur à percussion.

18. Dispositif selon la revendication 17, caractérisé en ce que le dispositif pour le broyage ultérieur sélectif est un concasseur à deux cylindres (32).

19. Dispositif selon une ou plusieurs des revendications 13 à 18, caractérisé en ce qu'on dispose après le dispositif de broyage ultérieur un dispositif de triage (35) exécuté sous forme de dispositif de tamisage.

20. Dispositif selon la revendication 13 à 18, caractérisé en ce que le dispositif de triage (35) est exécuté sous forme d'un séparateur à air, magnétique, d'un séparateur par flottation gravimétrique ou d'un chenal vibrant.
